# EUROPÄISCHE PATENTANMELDUNG

(11) **EP 3 620 658 A1**
(43) Veröffentlichungstag der Anmeldung: **11.03.2020**
(21) Anmeldenummer: 18192432.5
(22) Anmeldetag: 04.09.2018
(51) Int. Cl.: F04D 17/12, F01D 25/24, F04D 29/42

(54) **DECKEL EINES TURBOMASCHINENGEHÄUSES, TURBOMASCHINENGEHÄUSE MIT EINEM DECKEL, TURBOMASCHINE UND VERFAHREN ZUR HERSTELLUNG EINES DECKELS**

(71) Anmelder: Siemens Aktiengesellschaft, 80333 München (DE)
(72) Erfinder: Korbmacher, Lars, 46147 Oberhausen (DE); Meyer, Marcus, 47199 Duisburg (DE); Petri, Steffen, 45473 Mülheim (DE); Schickmann, Kai, 40489 Düsseldorf (DE)

(57) **Zusammenfassung**

Die Erfindung betrifft einen Deckel (COV) eines Turbomaschinengehäuses (TMC), insbesondere einer Radialturbomaschine (RTM), die technische Arbeit auf ein Prozessfluid (PFL) oder von einem Prozessfluid (PFL) fort überträgt, umfassend:
- eine sich entlang einer Achse (X) erstreckende Öffnung (OP) zur axialen Hindurchführung einer sich entlang dieser Achse (X) erstreckenden Welle (SH),
- eine sich entlang einer Umfangsrichtung (CDR) zu der Achse (X) erstreckende Anlagefläche (CSF) zur Anlage an einem Gehäusemantel (CCT) des Turbomaschinengehäuses (TMC.
Für eine platz- und kostenoptimierte Ausbildung von Turbomaschinengehäusen mit mindestens einem Deckel, Turbomaschinen und zur günstigen Herstellung eines Deckels wird vorgeschlagen, dass eine als Zuströmung (INL) oder Abströmung (EXL) des Prozessfluids (PFL) vorgesehene Strömungsleitung (PFC) als integraler Bestandteil des Deckels (COV) ausgebildet ist.

## Beschreibung

Deckel eines Turbomaschinengehäuses, Turbomaschinengehäuse mit mindestens einem Deckel, Turbomaschine, Verfahren zur Herstellung eines Deckels

Die Erfindung betrifft einen Deckel eines Turbomaschinengehäuses, insbesondere einer Radialturbomaschine, die technische Arbeit auf ein Prozessfluid oder von einem Prozessfluid fort überträgt, umfassend:
- eine sich entlang einer Achse erstreckende Öffnung zur axialen Hindurchführung einer sich entlang dieser Achse erstreckenden Welle,
- eine sich entlang einer Umfangsrichtung zu der Achse erstreckende Anlagefläche zur Anlage an einem Gehäusemantel des Turbomaschinengehäuses.

Daneben betrifft die Erfindung ein Verfahren zur Herstellung eines derartigen Deckels, ein Turbomaschinengehäuse umfassend einen derartigen Deckel und eine Turbomaschine mit einem derartigen Turbomaschinengehäuse.

Die meisten Turbomaschinen erfahren eine in Axialrichtung der Welle gerichtete Anströmung einer Beschaufelung oder von Laufrädern mittels des Prozessfluids. Eine Einströmung in ein Turbomaschinengehäuse mit einem Deckel der eingangs definierten Art erfolgt herkömmlich meist in radialer Richtung. Hierzu weist das Turbomaschinengehäuse in der Regel einen radial zu der Drehachse ausgerichteten Zuströmstutzen. Eine andere Möglichkeit, die nicht Gegenstand der Erfindung ist, sieht vor, dass beispielsweise ein Radialverdichterlaufrad zum Zwecke der axialen Zuströmung an einem Wellenende fliegend gelagert ist, wie es beispielsweise von Verdichtern für Getriebeverdichter bekannt ist. Der radiale Einströmstutzen an dem Gehäuse geht mit verhältnismäßig hohen Kosten für diese aufwändige Geometrie einher und vergrößert den radialen Bauraumbedarf erheblich. Hinzu kommt, dass die notwendige Umlenkung aus der Radialrichtung in die Axialrichtung zur Zuströmung zu der Beschaufelung bzw. den Laufrädern einerseits verlustbehaftet ist und andererseits axialen sowie radialen Bauraum verbraucht.

Die Erfindung hat es sich zur Aufgabe gemacht, derartige Nachteile zu vermeiden. Zur Lösung der erfindungsgemäßen Aufgabe wird ein Deckel, ein Turbomaschinengehäuse, ein Verfahren zur Herstellung eines Deckels und eine Turbomaschine der eingangs definierten Art vorgeschlagen mit den jeweils in den Ansprüchen definierten zusätzlichen kennzeichnenden Merkmalen der Erfindung. Das verbindende Element der Erfindung ist der erfindungsgemäße Deckel, wobei die rückbezogenen Unteransprüche vorteilhafte Weiterbildungen der Erfindung beinhalten.

Ausdrücke, wie axial, radial, tangential oder Umfangsrichtung beziehen sich stets auf die zentrale Achse der Öffnung des Deckels bzw. die Achse einer sich durch die Öffnung des Deckels erstreckenden Welle im Falle einer bereits zusammengefügten Turbomaschine.

Dadurch, dass der erfindungsgemäße Deckel eine integrierte Strömungsleitung aufweist, die als Zuströmung oder Abströmung ausgebildet ist, können entsprechende Turbomaschinengehäuse, die einen derartigen Deckel aufweisen, ansonsten ohne eine herkömmliche Zuströmung oder Abströmung gestaltet werden. Der besondere Vorteil der erfindungsgemäßen neuen Funktionsmodularität liegt nicht nur darin, dass an einem Gehäusemantel eine entsprechende Strömungsleitung eingespart werden kann, wenn diese an einem erfindungsgemäßen Deckel vorgesehen wird, sondern auch darin, dass infolge der Zuleitung des Prozessfluids im Bereich des Deckels das Prozessfluid bereits vor Eintritt in die Turbomaschine besser in Richtung der Zuströmung zu der Beschaufelung bzw. den Laufrädern ausgerichtet ist. In anderen Worten: Erfindungsgemäß ist die Zuleitung des Prozessfluids zu der Turbomaschine mit einem erfindungsgemäßen Deckel bereits erheblich axialer als bei einer herkömmlich radialen Zuströmung durch einen radialen Einströmstutzen des Gehäuses.

Eine vorteilhafte Weiterbildung der Erfindung sieht vor, dass der Deckel Versorgungsleitungen für eine Gasdichtung und/oder eine Ölheizung und/oder Sensoren, insbesondere Drucksensoren, als in den Deckel integrierte Bestandteile aufweist. Diese Anordnung ist besonders zweckmäßig, weil der Deckel besonders bevorzugt Träger einer Wellendichtung und/oder Träger eines Radiallagers und/oder Installationsort für Drucksensoren und/oder Temperatursensoren sein kann.

Eine andere vorteilhafte Weiterbildung sieht vor, dass die integrierte Strömungsleitung den Gesamtstrom des Prozessfluids in Teilströme aufteilende Kanäle aufweist. Diese derart aufteilende Kanalstruktur ermöglicht besonders zweckmäßig die strömungstechnische Vorbereitung des Prozessfluids auf die Zuströmung zu der nachfolgenden aerodynamischen Komponente. Diese ist in der Regel ein rotierendes Bauteil, beispielsweise ein Radialverdichterlaufrad oder eine Axialbeschaufelung. Die einzelnen Kanäle können hierbei lediglich durch Leitschaufeln voneinander in Umfangsrichtung getrennt sein oder auch als Kanäle im engeren Sinn mit voneinander in Umfangsrichtung trennenden massiveren Kanalwänden ausgebildet sein. Auf diese Weise ist es möglich, dem aus den Kanälen ausströmenden Prozessfluid einen bestimmten Drall aufzuprägen, der für eine optimale Zuströmung zu dem Rotor sorgt.

Eine weitere vorteilhafte Weiterbildung der Erfindung sieht vor, dass ein Lagerbockunterteil zur Unterstützung eines Radiallagers für die entlang der Achse sich erstreckende Welle als integraler Bestandteil des Deckels ausgebildet ist.

Bei einer Turbomaschine, die ein Gehäuse mit einem stirnseitig vorgesehenen erfindungsgemäßen Deckel aufweist, muss der Deckel zahlreiche Funktionen erfüllen. In der Regel erfordern diese Funktionen Zu- und Ableitungsleitungen für verschiedene Betriebsfluide und daneben auch Durchführungen für Versorgungsleitungen für elektrischen Strom sowie für Signalleitungen. Daneben kann der Deckel selbst auch als Träger für zahlreiche mittels dieser Leitungen zu versorgende Aggregate sein. Beispielsweise kann der Deckel Träger einer Wellendichtung und der Wellenlagerung sein, insbesondere Träger für ein Radiallager. Werden entsprechend die Versorgungsleitungen für diese Aggregate zumindest teilweise durch das Volumen des Deckels verlaufend gelegt, so werden herkömmlich Bohrungen für den entsprechenden Leitungsverlauf in dem Deckel vorgesehen. Das ist sehr aufwändig, zumal entsprechende Bohrungen nur mit gerader Verlaufsachse möglich sind und bei jedem Knick des Leitungsverlaufs eine separate Bohrung gefertigt werden muss, die häufig verschlossen werden muss, da nur ein axialer Teilbereich der Bohrung für den Leitungsverlauf benötigt wird.

Eine konventionelle spanende Fertigung eines erfindungsgemäßen Deckels ist verhältnismäßig schwierig bzw. aufwändig. Als eine bevorzugte Herstellungsmöglichkeit erkennt die Erfindung, dass der Deckel oder Teile einer Gussform des Deckels mittels eines additiven Fertigungsverfahrens vorteilhaft hergestellt werden können. Die besonderen Freiheitsgrade in der volumetrisch geometrischen Erzeugung freier dreidimensionaler Formen mittels eines additiven Fertigungsverfahrens können von der Erfindung sehr gut ausgenutzt werden, da die strömungstechnische Optimierung der Strömungsleitung zur Zuströmung oder Abströmung eines Prozessfluids zu der Turbomaschine durch den Deckel auf diese Weise kompromisslos durchgeführt werden kann. Daneben ist es möglich, die entsprechenden Versorgungsleitungen als integralen Bestandteil des Deckels für Wellendichtungen, Radiallagerungen, Ölheizungen und verschiedene Sensoren in den verbleibenden volumetrischen Freiräumen optimiert zu verlegen. Versorgungsleitungen für die Versorgung einer Wellendichtung bzw. einer Gasdichtung, für die Ölheizung können als Leitungen - vergleichbar wie Schläuche - in dem Volumen des Deckels gelegt werden, so dass zur Optimierung der Strömungsleitung für das Prozessfluid nahezu keine Einschränkungen vorliegen. Eine Zuleitung von Prozessfluid, die erfindungsgemäß als eine Strömungsleitung integraler Bestandteil des Deckels ist, kann mittels moderner Strömungsoptimierer derart geometrisch gestaltet werden, dass das Prozessfluid zunächst in einem in dem Deckel vorgesehenen Sammelringraum eingeleitet wird und anschließend der Sammelringraum den Gesamtstrom des Prozessfluids in verschiedene Teilströme verteilt auf anschließende Kanäle zur Zuführung zu dem strömungsleitenden Rotor der Turbomaschine aufteilt. Besonders vorteilhaft weist der Sammelringraum einen entlang des Umfangs nicht konstanten Querschnitt auf. Zweckmäßig ist der Sammelringraum im Bereich der Zuströmung des Prozessfluids am geräumigsten ausgebildet.

Die in den Deckel integrierte Strömungsleitung im Falle der Zuleitung des Prozessfluids zu dem Rotor kann das Prozessfluid axial direkt vor beispielsweise das erste Laufrad eines Radialverdichters führen, so dass einerseits eine strömungsoptimierte Zuströmung erfolgt und andererseits eine große Einsparung axialen Bauraums stattfindet.

Im Folgenden ist die Erfindung anhand eines speziellen Ausführungsbeispiels unter Bezugnahme auf Zeichnungen näher beschrieben. Es zeigen:
- Figur 1: eine schematische Darstellung eines Längsschnitts entlang einer Achse durch einen erfindungsgemäßen Deckel,
- Figur 2: eine schematische Darstellung eines axialen Längsschnitts durch eine erfindungsgemäße Turbomaschine mit einem erfindungsgemäßen Turbomaschinengehäuse.

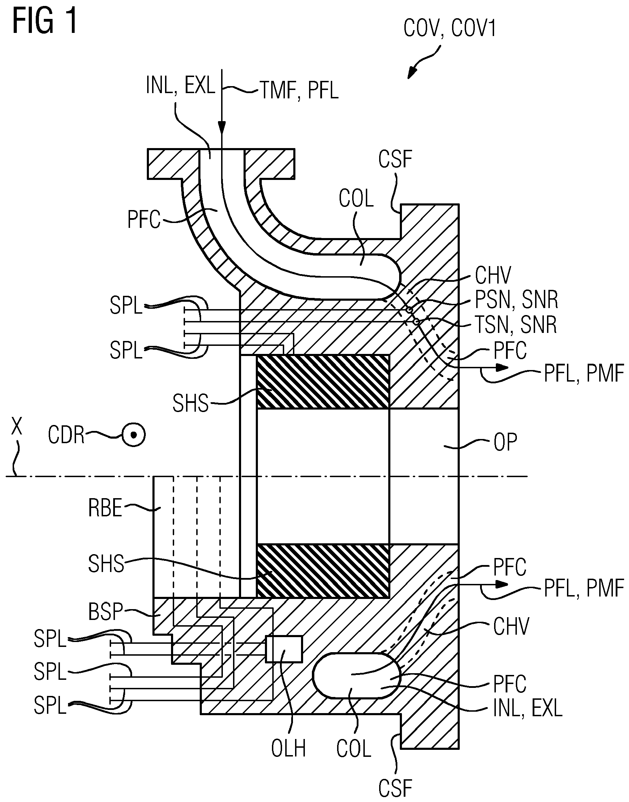

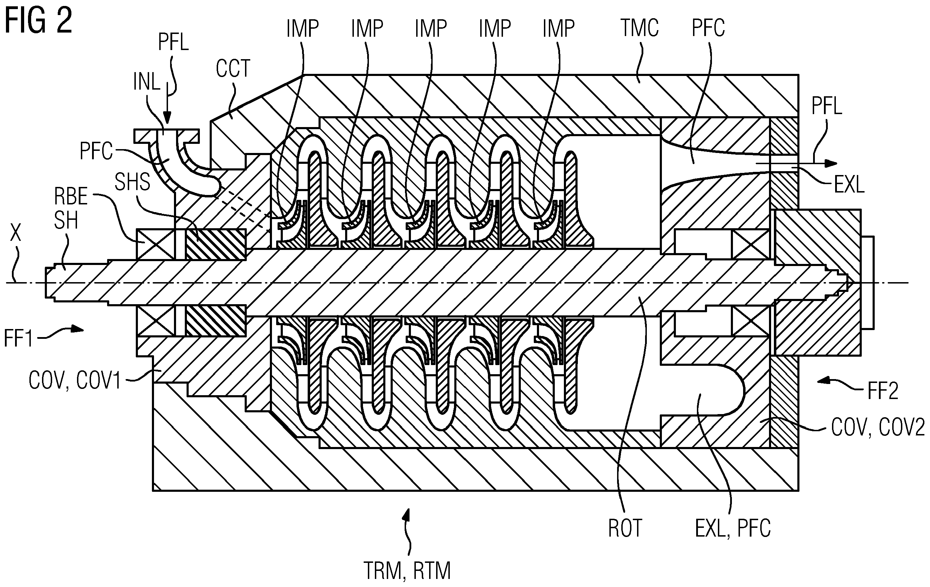

Figur 1 zeigt schematisch einen Längsschnitt durch einen erfindungsgemäßen Deckel COV eines Turbomaschinengehäuses TMC, wie es im Zusammenhang mit einer Turbomaschine TRM in Figur 2 dargestellt ist. Die in Figur 2 dargestellte Turbomaschine TRM ist als Radialturbomaschine RTM ausgeführt, wobei die Erfindung grundsätzlich auch in axialen Turbomaschinen angewendet werden kann. Identische Bezugszeichen in den Figuren bezeichnen jeweils funktionsidentische Gegenstände.

Die in Figur 2 dargestellte Turbomaschine TRM ist ein Radialverdichter, der technische Arbeit auf ein Prozessfluid PFL überträgt. Konkret wird das Prozessfluid PFL mittels Laufrädern IMP eines Rotors ROT bei der Durchströmung beschleunigt und in Diffusoren hinter den entsprechenden Laufrädern IMP unter Ausbildung einer Druckerhöhung abgebremst. Das Prozessfluid PFL durchläuft dementsprechend nach Einströmung durch eine Zuströmung INL in die Turbomaschine TRM bis zum Austritt durch eine Abströmung EXL aus der Turbomaschine TRM eine Druckerhöhung. Grundsätzlich ist die Erfindung auch für einen umgekehrten Prozess - eine Entspannung eines Prozessfluids unter Gewinnung technischer Arbeit - möglich.

Der in Figur 1 dargestellte Deckel COV weist eine sich entlang einer Achse X erstreckende Öffnung OP auf. Zur axialen Hindurchführung einer sich entlang dieser Achse X erstreckenden Welle SH, wie dies auch in Figur 2 dargestellt ist. Zum Zwecke der Anlage an einem Gehäusemantel CCT des Turbomaschinengehäuses TMC weist der Deckel eine sich entlang einer Umfangsrichtung CTR zu der Achse X erstreckende Anlagefläche SF auf. Die Anlagefläche dient einerseits dem mechanischen Widerstand gegen den Differenzdruck zwischen dem Innendruck und dem Umgebungsdruck im Betrieb der Turbomaschine und andererseits der Abdichtung gegen einen Austritt des Prozessfluids PFL aus der Turbomaschine TRM in die Umgebung. Zum Zwecke der Abdichtung können auch hier nicht dargestellte Dichtungselemente vorgesehen sein.

Der Deckel COV weist eine als Zuströmung INL oder Abströmung EXL des Prozessfluids PFL vorgesehene Strömungsleitung PFC als integralen Bestandteil des Deckels COV auf. In Figur 2 ist linksseitig ein erster Deckel COV1 vorgesehen, der zeigt, dass ein entsprechender Deckel COV eine als Zuströmung INL vorgesehene Strömungsleitung PFC aufweist und rechtsseitig ist ein zweiter Deckel COV2 wiedergegeben, der den Fall zeigt, dass eine Strömungsleitung PFC, die in den Deckel COV integriert ist, als Abströmung EXL für das Prozessfluid PFL ausgebildet ist. Der erste Deckel COV1 befindet sich auf einer ersten Stirnseite FF1 des Turbomaschinengehäuses TMC und der zweite Deckel COV2 befindet sich auf einer zweiten Stirnseite FF2.

Die Figur 1 zeigt den ersten Deckel COV1 mit der als Zuströmung INL ausgebildeten Strömungsleitung PFC für das Prozessfluid PFL, der in der Figur 2 auf der ersten Stirnseite FF1 vorgesehen ist. Der Deckel COV bzw. der erste Deckel COV1, der in der Figur 1 dargestellt ist, ist mittels "Additive Manufacturing" hergestellt, ebenso wie der zweite Deckel COV2. Diese Herstellungsmethode ermöglicht eine besonders freie Gestaltung der dreidimensionalen Geometrie der verschiedenen Funktionselemente des Deckels COV. Der erste Deckel COV1 ist Träger von zusätzlichen Funktionselementen, beispielsweise einer Ölheizung OLH, eines Radiallagers RBE und einer Wellendichtung SHS, die als Gasdichtung ausgebildet ist. Es sind Versorgungsleitungen SPL vorgesehen für die Wellendichtung SHS, das Radiallager RBE und Sensoren SNR, einen Temperatursensor TSN und einen Drucksensor PSN zur Messung von Druck und Temperatur des Prozessfluids PFL in der Zuströmung INL. Die Ölheizung OLH bereitet ein Lageröl zur Versorgung des Radiallagers RBE vor, wobei die Versorgungsleitungen SPL für diese Ölheizung OLH integraler Bestandteil des Deckels COV sind. Diese Versorgungsleitungen SPL für die Ölheizung OLH können einerseits eine elektrische Heizung versorgen und andererseits ein erhitztes Fluid der Ölheizung OLH zuführen bzw. von der Ölheizung OLH fortführen.

Die Strömungsleitung PFC, die als Zuleitung INL oder auch als Ableitung EXL ausgebildet sein kann, umfasst einen Sammelraum COL (Sammelringraum), der sich im Wesentlichen ringförmig in Umfangsrichtung CDR um die Achse X erstreckt und von diesem Sammelraum ausgehende einzelne Kanäle CHV, die der nachfolgenden Beschaufelung bzw. Laufrädern IMP des Rotors ROT das Prozessfluid PFL strömungstechnisch optimiert ausgerichtet zuführen. Der Sammelraum COL weist einen entlang des Umfangs nicht konstanten Querschnitt auf.

## Patentansprüche

1. Deckel (COV) eines Turbomaschinengehäuses (TMC), insbesondere einer Radialturbomaschine (RTM), die technische Arbeit auf ein Prozessfluid (PFL) oder von einem Prozessfluid (PFL) fort überträgt, umfassend:
- eine sich entlang einer Achse (X) erstreckende Öffnung (OP) zur axialen Hindurchführung einer sich entlang dieser Achse (X) erstreckenden Welle (SH),
- eine sich entlang einer Umfangsrichtung (CDR) zu der Achse (X) erstreckende Anlagefläche (CSF) zur Anlage an einem Gehäusemantel (CCT) des Turbomaschinengehäuses (TMC),
**dadurch gekennzeichnet,**
**dass** eine als Zuströmung (INL) oder Abströmung (EXL) des Prozessfluids (PFL) vorgesehene Strömungsleitung (PFC) als integraler Bestandteil des Deckels (COV) ausgebildet ist.

2. Deckel (COV) nach Anspruch 1, wobei Versorgungsleitungen (SPL) für eine Wellendichtung, insbesondere Gasdichtung (SHS) und/oder eine Wellenlagerung und/oder eine Ölheizung (OLH) und/oder Sensoren (SNR), insbesondere Drucksensoren (PSN) in den Deckel (COV) integriert sind.

3. Deckel (COV) nach mindestens einem der Ansprüche 1 oder 2, wobei die integrierte Strömungsleitung (PFC) den Gesamtstrom (TMF) des Prozessfluids (PFL) in Teilströme (PMF) aufteilende Kanäle (CHV) aufweist.

4. Deckel (COV) nach Anspruch 3, wobei die Kanäle (CHV) derart geformt sind, dass das dem aus den Kanälen (CHV) ausströmenden Prozessfluid (PFL) ein bestimmter Drall aufgeprägt ist.

5. Deckel (COV) nach mindestens einem der Ansprüche 1 bis 4, wobei ein Lagerbockunterteil (BSP) zur Unterstützung eines Radiallagers (RBE) für die entlang der Achse (X) sich erstreckende Welle (SH) als integraler Bestandteil des Deckels (COV) ausgebildet ist.

6. Deckel (COV) nach mindestens einem der Ansprüche 1 bis 5, wobei der Deckel (COV) oder Teile einer Gussform des Deckels (COV) mittels eines additiven Fertigungsverfahrens hergestellt sind.

7. Verfahren zur Herstellung eines Deckels (COV) nach mindestens einem der Ansprüche 1 bis 6, wobei der Deckel (COV) oder Teile einer Gussform des Deckels (COV) mittels eines additiven Fertigungsverfahrens hergestellt werden.

8. Turbomaschinengehäuse (TMC), insbesondere einer Radialturbomaschine (RTM), umfassend:
- einen Gehäusemantel (CCT), der eine im Wesentlichen zylindrische Form aufweist, wobei die Zylinderform sich entlang einer Achse (X) erstreckt,
- einen ersten Deckel (COV1), der axial an einer ersten Stirnseite (FF1) des Turbomaschinengehäuses (CCT) abnehmbar befestigt verschließend vorgesehen ist,
- eine Zuströmung (INL), die eine Einströmung eines Prozessfluids (PFL) in das Turbomaschinengehäuse (TMC) ermöglicht,
- eine Abströmung (EXL), die ein Ausströmen des Prozessfluids (PFL) aus dem Turbomaschinengehäuse (TMC) ermöglicht,
**dadurch gekennzeichnet, dass**
der erste Deckel (COV1) nach Anspruch 1 ausgebildet ist.

9. Turbomaschine (TRM), insbesondere Radialturbomaschine (RTM), umfassend einen Rotor (ROT) und ein Turbomaschinengehäuse (TMC)
wobei das Turbomaschinengehäuse (TMC) nach Anspruch 8 ausgebildet ist.
